(19) Europäisches Patentamt

European Patent Office

Office européen des brevets

(11) Veröffentlichungsnummer: **0 313 880 B1**

(12) **EUROPÄISCHE PATENTSCHRIFT**

(45) Veröffentlichungstag der Patentschrift: **16.12.92**

(21) Anmeldenummer: **88116384.4**

(22) Anmeldetag: **04.10.88**

(51) Int. Cl.⁵: **B60L 5/20**

(54) **Verfahren zur Herstellung eines geklebten Schleifbügels für Stromabnehmer.**

(30) Priorität: **24.10.87 DE 3736035**

(43) Veröffentlichungstag der Anmeldung:
**03.05.89 Patentblatt 89/18**

(45) Bekanntmachung des Hinweises auf die
Patenterteilung:
**16.12.92 Patentblatt 92/51**

(84) Benannte Vertragsstaaten:
**AT DE FR GB SE**

(56) Entgegenhaltungen:
**DE-A- 2 405 910**
**DE-A- 2 428 066**
**DE-A- 2 654 264**

(73) Patentinhaber: **Ringsdorff-Werke GmbH**
**Drachenburgstrasse 1 Bad Godesberg**
**W-5300 Bonn 2(DE)**

(72) Erfinder: **Müller, Hans Josef**
**Rolandswerther Strasse 6**
**W-5300 Bonn 2(DE)**
Erfinder: **Walbröl, Bruno**
**Weinbergweg 2**
**W-5484 Bad Breisig 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 313 880 B1

**Beschreibung**

Die Erfindung betrifft ein Verfahren zur Herstellung einer Verbindung zwischen der Kohlenstoffleiste und der metallischen Fassung eines Schleifbügels für Stromabnehmer mit einer elektrisch leitende Partikel und härtbare Kleber enthaltenden Klebschicht.

Zur Übertragung elektrischer Ströme zwischen gegeneinander bewegten elektrischen Leitern bestimmte Schleifbügel oder Kontaktstücke bestehen im allgemeinen aus einer Kohlenstoffleiste, die verschiedene, dem Verwendungszweck angepaßte Profile aufweisen kann, und einer metallischen Fassung oder einem Träger. Zweck von Fassung und Träger ist vor allem die Versteifung der Kohlenstoffleisten, deren Festigkeit sonst für die häufig stoßartigen Belastungen des Schleifbügels nicht ausreicht . Die Kohlenstoffleisten sind häufig in die Fassung geklemmt oder durch Nieten oder Schrauben mit der Fassung verbunden. Da die bekannten mechanischen Verbindungen wegen ihrer Kerbwirkung die Dauerfestigkeit der Kohlenstoffleisten beeinträchtigen, verwendet man auch zunehmend Löt- und Klebverbindungen zur Befestigung der Kohlenstoffleisten auf der Fassung. Durch die DE-PS 706 413 ist beispielsweise ein Schleifbügel bekannt, dessen Kohlenstoffleiste auf eine Fassung in Form eines Blechträgers mit Hilfe einer Kunstharzschicht geklebt ist. Das Kunstharz wird auf die Unterseite der Leiste, die zuvor zur Verbesserung der Stromverteilung galvanisch mit einer Kupferschicht versehen ist, und die Blechfassung aufgetragen, die Teile werden zusammengefügt und die Kunstharzschichten gehärtet. Ein Nachteil dieser Verbindung ist der große elektrische Widerstand der Klebschicht, so daß der Kohlenstoffleiste der elektrische Strom nicht wie üblich über die Fassung, sondern über ein besonderes in der Kohlenstoffleiste eingelassenes Stromseil zugeführt werden muß. Eine geklebte Verbindung Kohlenstoffleiste und Fassung ist auch durch die DE-OS 34 05 674 bekannt, bei der über ein Metallgewebeband oder eine Metallfolie eine elektrisch leitende Verbindung zwischen der Kohlenstoffleiste und der Stromzuführung hergestellt ist.

Eine besondere Stromzuführung kann entfallen, wenn die Klebschicht zwischen Fassung und Kohlenstoffleiste den elektrischen Strom gut leitet. Der elektrische Widerstand der verbindenden Klebschicht kann durch Metallpulver (DE-AS 12 57 825, DE-OS 26 54 264) oder Metallgewebe (DE-AS 10 73 055) verkleinert werden, die in der Klebschicht eingebettet sind. Überraschend wurde beobachtet, daß die elektrische Belastbarkeit von Schleifbügeln mit metallhaltigen Klebschichten vergleichsweise gering ist, einen hohen Spannungsabfall haben und sich stärker erwärmen, wodurch die Stabilität der Klebschichten beeinträchtigt wird. Eine höhere Strombelastbarkeit der Schleifbügel wird nach DE-PS 24 05 910 nur dann erzielt, wenn vor dem Auftragen des metallhaltigen Klebstoffs wenigstens eine der Kontaktflächen mit Kupfer, Silber oder einem Metall mit ähnlicher Übergangsspannung versehen wird.

Das Aufbringen einer Metallbeschichtung geht auch aus der DE-A-2654264 hervor. Hier sind die durch Klebstoff zu verbindenden Kontaktflächen mit einem vorzugsweise auf galvanischem Weg oder durch ein Metallspritzverfahren aufgebrachten Metallüberzug versehen, der einen solchen Rauhigkeitsgrad aufweist, daß Spitzen die Klebefolie unter Bildung von Kontaktbrücken durchdringen.

Verbindungen dieser Art zwischen Kohlenstoffleisten und Fassungen sind wegen der metallischen Beschichtung wenigstens einer Kontaktfläche vergleichsweise aufwendig und zudem steigt mit stärkerer Strombelastung, vermutlich durch Veränderungen in der metallischen Schicht auch der Spannungsabfall, so daß die Klebverbindungen auch dieser Ausführungsform beim Betrieb des Schleifbügels stark erhitzt und gegebenenfalls auch geschädigt wird. Einen Weg, ohne eine derartige Metallbeschichtung der Schleifleiste oder des Trägers auszukommen, lehrt die DE-OS 24 28 066 A1. Dort wird eine elektrisch leitende Verbindung zwischen der Schleifleiste und dem Träger bei Verwendung einer elektrisch nicht leitenden, wärmehärtenden Klebeschicht dadurch erzielt, daß entweder der metallische Träger oder das Kohleschleifstück oder aber beide über den gesamten Bereich der Berührungsfläche so uneben, z.B. gerillt ausgebildet ist/sind, daß beim Zusammenpressen und einer Härtung des Klebers oberhalb von 140 ° C eine hinreichende Leitfähigkeit innerhalb der Verbindung zustande kommt. Aber auch nach diesem Verfahren hergestellte Verbindungen haben Nachteile. Zwischen den erhabenen Bereichen der unebenen Oberflächen, z.B. in den Nuten der Rillung befinden sich noch immer elektrisch nicht leitende, relativ dicke und damit spannungsempfindliche Klebstofflagen oder -Zonen. Die Kontaktbereiche zwischen Schleifstück und Träger sind auf diese erhabenen Zonen reduziert und beschränken den Strom- und Wärmedurchgang und schließlich muß die unebene Oberflächenstruktur primär durch einen zusätzlichen, mit Aufwand verbundenen spanabhebenden Bearbeitungsschritt erzeugt werden. Der Erfindung liegt daher die Aufgabe zugrunde, eine beständigere Klebverbindung mit einfacheren Mitteln herzustellen, die auch nach längerer Beanspruchung einen kleinen Spannungsabfall hat.

Die Aufgabe wird mit einem Verfahren der eingangs genannten Art dadurch gelöst, daß

a) die zu verklebenden Flächen von Kohlenstoffleiste und Fassung aufgerauht und

b) mit einer verdünnten Klebstofflösung beschichtet werden,

2

c) auf wenigstens eine Klebstoffschicht elektrisch leitende Partikel aufgetragen,

d) die Flächen zusammengepreßt und die Klebstoffschichten gehärtet werden.

Eine wesentliche Voraussetzung für die Herstellung der Klebverbindung zwischen Kohlenstoffleiste und Fassung, die einen kleinen Übergangswiderstand hat und sich nur leicht erwärmt, ist die Aufrauhung der Kontaktflächen. Die Rauhtiefe $R_t$ der Kohlenstoffleiste soll wenigstens 50 $\mu$m betragen, die mittlere Rauhtiefe $R_z$ wenigstens 40 $\mu$m und die metallische Fassung oder Träger, z.B. aus Aluminium, soll etwa mit der gleichen Rauhigkeit versehen sein. Durch die Aufrauhung vergrößert sich die Oberfläche und damit die tatsächliche Größe der Kontaktflächen erheblich, die ein Vielfaches der Projektionsflächen betragen. Das Aufrauhen der Kontaktflächen erfolgt durch Sandstrahlen oder Schleifen oder andere an sich bekannte Verfahren, wie etwa elektrochemisches Ätzen. Die aufgerauhten und gegebenenfalls gereinigten Kontaktflächen werden mit einer Klebstofflösung beschichtet. Unverdünnte Klebstoffe benetzen die durch das Aufrauhen geschaffenen konkaven Abschnitte der Kontaktflächen nur zu einem Teil oder überhaupt nicht, so daß mit Klebstoffen etwas größerer Viskosität der Effekt der Oberflächenvergrößerung nicht genutzt werden kann, wodurch vor allem auch die Haftfestigkeit gesenkt wird. Der Zusatz von Lösemitteln und der Grad der Verdünnung hängt daher wesentlich von der Viskosität des verwendeten Klebstoffs und der Benetzbarkeit der Kontaktflächen ab. Den wirkungsvollsten Verdünnungsgrad kann man einfach durch Auftropfen der Klebstofflösung auf die Kontaktflächen und Beobachtung der Benetzung bestimmen. Als Klebstoffe eignen sich handelsübliche härtbare Kleber und härtbare Harze, wie Phenolresolharze, Novolake (Hexa-Harze), Epoxidharze und Furanharze, die in bekannter Weise mit Härtungskatalysator versetzt sein können. Besonders vorteilhaft und einfach zu verarbeiten sind Phenolresolharze. Als Löse-und Verdünnungsmittel der Kleber bzw. Harze verwendet man zweckmäßig handelsübliche Lösemittel, die Alkohole oder Chlorkohlenwasserstoffe enthalten, in Verbindung mit Phenolresolharz, beispielsweise Methanol oder Ethanol. Der Lösemittelgehalt beträgt etwa 20 bis 80 %. Das für eine spezielle Verbindung wirkungsvollste Mischungsverhältnis wird wie oben beschrieben durch einfache Versuche bestimmt.

Die Klebstofflösung wird auf die Kontaktflächen von Kohleleiste und Fassung durch Streichen, Bürsten, Spritzen oder auch Tauchen aufgebracht und eine Schicht erzeugt, deren Dicke wenigstens gleich der Rauhtiefe der Kontaktflächen und vorzugsweise nicht mehr als das Doppelte der Rauhtiefe beträgt. Die dünnen beispielsweise 0,05 bis 0,15 mm dicken Klebstoffschichten enthalten keine elektrisch leitende Partikel und sind praktisch Nichtleiter. Die leitenden Partikel werden auf mindestens eine der Klebstoffschichten, beispielsweise durch Spritzen oder Pudern aufgetragen, in einer Menge, die etwa dem halben Volumen der Klebstoffschicht entspricht. Geeignet sind vor allem Metallpartikel mit einer Korngröße über 0,1 mm, aber auch Graphitpulver, die maximale Partikelgröße soll etwa der Dicke der gesamten Klebschicht zwischen Kohlenstoffleiste und Fassung entsprechen. Bei der Verwendung leicht verformbarer Metalle, wie Kupfer, können auch Partikel verwendet werden, deren Durchmesser etwas größer ist, als die Dicke der Klebschicht. Kupferpartikel werden aus diesem Grund und wegen ihrer günstigen elektrischen Eigenschaften zur Herstellung der Verbindung bevorzugt. Im allgemeinen reicht die Belegung einer der Klebstoffschichten aus, eine Verbindung mit vergleichsweise kleinem Widerstand herzustellen.

Abweichend von den vorbekannten Verbindungsverfahren sind die elektrisch leitenden Partikel nicht von Kunstharzfilmen umhüllt. Isolierende Hüllen bilden sich offenbar auch nicht, wenn die Kontaktflächen von Kohlenstoffleiste und Fassung gegeneinander gepreßt werden, wobei größere Partikel eine direkte Brücke zwischen den Kontaktflächen und kleinere Partikel den Spalt ohne isolierende Zwischenschichten überbrückende Leitungspfade bilden. Die mit Klebstoff beschichteten und mit elektrisch leitenden Partikeln belegten Teile des Schleifbügels werden mit einem Druck von vorzugsweise 25 bis 35 MPa zusammengepreßt und eine Klebfuge von etwa 0,2 bis 0,6 mm Dicke gebildet. Ausfließender überschüssiger Klebstoff wird entfernt und der Schleifbügel unter Aufrechterhaltung des Drucks zur Härtung der Harzkomponenten erwärmt. Härtungstemperatur und -zeit hängen in an sich bekannter Weise von der Art des Klebstoffs und gegebenenfalls zugesetzter Härtungskatalysatoren ab. Bei Phenolresolharz-haltigen Klebstoffen reicht beispielsweise eine Temperatur von 80 bis 120 °C und eine Zeit von 1 bis 3 h zum Härten aus. Die besten Bedingungen kann man einfach mit Handversuchen ermitteln.

Verfahrensgemäß hergestellte Verbindungen zwischen Kohlenstoffleisten und metallischer Fassung eines Schleifbügels zeichnen sich bei hoher, allen mechanischen Beanspruchungen gewachsener Festigkeit und durch einen sehr kleinen Spannungsabfall, auch bei Dauerbelastung aus, obwohl die Kontaktflächen nicht mit Metallüberzügen versehen sind. Die nach der Lehre der DE-PS 24 05 910 zur Einstellung eines kleinen Spannungsabfalls unbedingt nötige Metallisierung der Kontaktflächen entfällt bei verfahrensgemäß hergestellten Schleifbügeln, wodurch sich der technische Aufwand wesentlich verringert. Ein anderer Vorteil ist die Verwendung handelsüblicher Kleber und härtbarer Harze. Besondere, elektrisch leitende Partikel enthaltende Harzgemische brauchen nicht hergestellt zu werden.

Das Verfahren wird nachfolgend am Beispiel von Kohlenstoffleisten, Profil RH 820 und leistenartigen Fassungen aus Aluminium beispielhaft beschrieben. Leisten und Fassungen wurden durch Strahlen und Schleifen aufgerauht, die Rauhtiefen waren wie folgt:

1. gestrahlt - Redurit F 40, Korn 0,7 - 0,8 mm
2. geschliffen - Korundscheibe K 113/30
3. geschliffen - Bandschleifer K 60
4. geschliffen - Bandschleifer P 40
5. geschliffen - Schleifsegmente K 109/20
6. geschliffen - Diamantscheibe

| | Rauhtiefe $R_t$ | mittlere Rauhtiefe $R_z$ |
|---|---|---|
| 1 | 72 $\mu$m | 59 $\mu$m |
| 2 | 86 | 86 |
| 3 | 57 | 45 |
| 4 | 93 | 76 |
| 5 | 111 | 89 |
| 6 | 82 | 44 |
| Die Rauhigkeit der Aluminium-Leisten betrug - $R_t$ - 40 bis 70 $\mu$m, $R_z$ - 40 bis 60 $\mu$m. | | |

Auf die aufgerauhten Flächen wurde eine Klebstofflösung aufgestrichen, die gleiche Teile Phenolharz und Methanol enthielt. Die Klebstoffschichten, die die Oberflächen vollständig benetzten, hatten auf den Kohlenstoffleisten eine Dicke von 0,05 bis 0,15 mm und auf den Aluminiumleisten von etwa 0,1 bis 0,2 mm. Beide Klebstoffschichten wurden mit Kupfergrieß, Korngröße - 0,1 bis 0,3 mm bepudert und die Kontaktflächen mit einem Druck von 30 MPa gegeneinander gepreßt. Unter dem anliegenden Druck floß eine kleine Harzmenge aus der Fuge und die größeren Kupferpartikel wurden zwischen den Kontaktflächen verformt. Zum Härten des Harzes wurden die Schleifbügel unter Aufrechterhaltung des Drucks auf 120 °C erhitzt und die Temperatur drei Stunden gehalten. Die mittlere Dicke der gehärteten Klebschichten war etwa 0,20 bis 0,30 mm, der Metallanteil betrug ca. 50 Gew.%.

Der Übergangswiderstand der Verbindung wurde vergleichend bei einer Strombelastung von 30 A an Probekörpern mit den Maßen - Breite - 28 mm, Länge - 35 mm, Höhe - 20 mm - gemessen (1 - Schleifbügel mit galvanisch verkupferter Kohlenstoffleiste, Klebstoff-kupfergefülltes Phenolresolharz; 2 - Kontaktfläche nicht metallisiert, Klebstoff wie 1; 3 - Beispiel nach der Erfindung):

| | | Übergangswiderstand $\Omega \cdot cm^2$ | Temperatur °C |
|---|---|---|---|
| 1 | eine Minute | 0,11 | 25 |
| | 30 Minuten | 0,23 | 100 |
| 2 | eine Minute | 0,13 | 25 |
| | 30 Minuten | 0,13 | 85 |
| 3 | eine Minute | 0,04 | 25 |
| | 30 Minuten | 0,04 | 75 |

Verbindungen mit verkupferten Kohlenstoffleisten haben zunächst einen vergleichsweise niedrigen Widerstand, der vermutlich bedingt durch Oxidation der Kupferschicht schnell ansteigt und nach längerer Belastungszeit den Widerstand der aus kupfergefülltem Harz gebildeten Klebverbindung übertrifft. Wesentlich kleiner ist der Widerstand der nach dem erfindungsgemäßen Verfahren hergestellten Verbindungen, deren Temperatur auch nach längerer Betriebszeit deutlich geringer ist. Die Einzelproben mit einer mittleren Rauhtiefe > 40 $\mu$m (Proben 1 bis 6) unterscheiden sich um höchstens 25 % von dem in der Tabelle angegebenen Mittelwert.

**Patentansprüche**

1. Verfahren zur Herstellung einer Verbindung zwischen der Kohlenstoffleiste und der metallischen Fassung eines Schleifbügels für Stromabnehmer mit einer elektrisch leitende Partikel und härtbare Kleber enthaltenden Klebschicht, wobei
   a) die zu verklebenden Flächen von Kohlenstoffleiste und Fassung aufgerauht und
   b) mit einer verdünnten Klebstofflösung beschichtet werden,

c) auf wenigstens eine Klebstoffschicht elektrisch leitende Partikel aufgetragen,

d) die Flächen zusammengepreßt und die Klebstoffschichten gehärtet werden.

**2.** Verfahren nach Patentanspruch 1,

dadurch gekennzeichnet,

daß durch Schleifen oder Sandstrahlen der zu verklebenden Flächen eine mittlere Rauhtiefe von wenigstens 40 $\mu$m erzeugt wird.

**3.** Verfahren nach den Patentansprüchen 1 und 2,

dadurch gekennzeichnet,

daß Phenolresolharz-haltige Klebstoffe verwendet werden.

**4.** Verfahren nach den Patentansprüchen 1 bis 3,

dadurch gekennzeichnet,

daß Klebstofflösungen mit einem Lösemittelgehalt von 20 bis 80 % verwendet werden.

**5.** Verfahren nach den Patentansprüchen 1 bis 4,

dadurch gekennzeichnet,

daß Alkohole als Lösemittel verwendet werden.

**6.** Verfahren nach den Patentansprüchen 1 bis 5,

dadurch gekennzeichnet,

daß auf die zu verklebenden Flächen Klebstoffschichten aufgebracht werden, deren Dicke wenigstens gleich der Rauhtiefe und höchstens gleich der doppelten Rauhtiefe ist.

**7.** Verfahren nach den Patentansprüchen 1 bis 6,

dadurch gekennzeichnet,

daß auf die Klebstoffschicht Kupferpulver mit einer Korngröße von wenigstens 0,1 mm aufgebracht wird.

**8.** Verfahren nach den Patentansprüchen 1 bis 7,

dadurch gekennzeichnet,

daß Kohlenstoffleiste und Fassung mit einem Druck von 25 bis 35 MPa zusammengepreßt werden und der Druck bis zur Aushärtung des Klebstoffs aufrechterhalten wird.

**Claims**

**1.** Process for the manufacture of a connection between the carbon strip and the metal support of a sliding brush for current collectors, with an electrically conducting particulate and hardenable adhesive-containing adhesive layer wherein

a) the surfaces of the carbon strip and support to be stuck together are roughened and

b) are coated with a diluted adhesive solution,

c) electrically conducting particles are applied to at least one adhesive layer,

d) the surfaces are pressed together and the adhesive layers hardened.

**2.** Process according to Claim 1, characterized in that a mean roughening depth of at least 40 $\mu$m is produced by grinding or sanding of the surfaces to be stuck together.

**3.** Process according to Claims 1 and 2, characterized in that phenolic resol resin-containing adhesives are used.

**4.** Process according to Claims 1 to 3, characterized in that adhesive solutions with a solvent content of 20 to 80 % are used.

**5.** Process according to Claims 1 to 4, characterized in that alcohols are used as solvent.

**6.** Process according to Claims 1 to 5, characterized in that there are applied to the surfaces to be stuck together adhesive layers whose thickness is at least equal to the roughening depth and at most equal to double the roughening depth.

7. Process according to Claims 1 to 6, characterized in that copper powder with a particle size of at least 0.1 mm is applied to the adhesive layer.

8. Process according to Claims 1 to 7, characterized in that carbon strip and support are pressed together with a pressure of 25 to 35 MPa and the pressure is maintained until hardening of the adhesive.

**Revendications**

1. Procédé de fabrication d'une liaison entre la barre de carbone et le chassis métallique d'un balai de frottement pour prise de courant avec une couche adhésive contenant des particules conductrices de l'électricité et de la colle durcissable, dans lequel
   a) les surfaces à coller de la barre de carbone et du chassis sont rendues rugueuses et
   b) sont recouvertes d'une solution de colle étendue,
   c) on applique des particules conductrices de l'électricité sur au moins une des couches de colle,
   d) les surfaces sont pressées l'une contre l'autre et les couches de colle sont durcies.

2. Procédé selon la revendication 1, caractérisé
   - en ce que par frottement ou jet de sable des surfaces à coller on obtient une profondeur moyenne de rugosité d'au moins 40 $\mu$m.

3. Procédé selon les revendication 1 et 2, caractérisé
   - en ce qu'on utilise des colles contenant de la résine phénol-résol.

4. Procédé selon les revendications 1 à 3, caractérisé
   - en ce que des solutions d'adhésif sont utilisées avec un contenu de solvant de 20 à 80%.

5. Procédé selon les revendications 1 à 4, caractérisé
   - en ce qu'on utilise des alcools comme solvants.

6. Procédé selon les revendications 1 à 5, caractérisé
   - en ce qu'on applique sur les surfaces à coller des couches de colle, dont l'épaisseur est au moins égale à la profondeur de rugosité et au maximum égale au double de l'épaisseur de rugosité.

7. Procédé selon les revendications 1 à 6, caractérisé
   - en ce que sur la couche de colle on applique de la poudre de cuivre ayant une grandeur de grains d'au moins 0,1 mm.

8. Procédé selon les revendications 1 à 7, caractérisé
   - en ce que barre de carbone et le châssis sont pressés l'une contre l'autre à une pression de 25 à 35 MPa et la pression est maintenue jusqu'au durcissement de la colle.